# EUROPÄISCHE PATENTSCHRIFT

(11) **EP 0 946 355 B1**
(45) Veröffentlichungstag und Bekanntmachung des Hinweises auf die Patenterteilung: **07.06.2000**
(21) Anmeldenummer: 98901931.0
(22) Anmeldetag: 07.01.1998
(51) Int. Cl.: B32B 5/26, B60R 13/02

(54) **MEHRLAGIGER VERBUNDKÖRPER**
MULTI-LAYER COMPOSITE BODY
ELEMENT COMPOSITE MULTICOUCHE

(30) Priorität: 21.02.1997 DE 19706839
(43) Veröffentlichungstag der Anmeldung: 06.10.1999
(73) Patentinhaber: Möller Plast GmbH, 33649 Bielefeld (DE)
(72) Erfinder: BECKMANN, Friedhelm, D-32120 Hiddenhausen (DE)
(74) Vertreter: Schirmer, Siegfried, Dipl.-Ing.
(86) Internationale Anmeldenummer: DE9800015
(87) Internationale Veröffentlichungsnummer: WO9836900

(56) Entgegenhaltungen:
- EP-A- 0 589 193
- WO-A-91/17883
- DE-A- 2 945 977
- DE-A- 4 403 977
- GB-A- 2 235 651

## Beschreibung

Die Erfindung betrifft einen mehrlagigen Verbundkörper, der gebildet ist durch mit thermoplastischem Kunststoff gebundene Naturfaserschichten und gegebenenfalls Thermoplastschichten, zur Herstellung von Bauteilen oder Formteilen, insbesondere für Kraftfahrzeuge.

Es sind bereits aus Naturfasern, zum Beispiel Jute, Hanf, Sisal, Flachs und dgl., oder aus Mischungen aus verschiedenen Naturfasern gebildete Bauteile bekannt. Zur Herstellung der Bauteile werden den Naturfasern aus thermoplastischem Kunststoff bestehende Fasern zugemischt oder die Naturfasern werden unmittelbar mit einem thermoplastischen Bindemittel imprägniert und zu Fasermatten vorgeformt, die anschließend bei einer oberhalb der Schmelztemperatur des verwendeten Kunststoffs liegenden Formgebungstemperatur durch Verpressen in einem Formwerkzeug in die gewünschte Form gebracht werden. Nach dem Erkalten und Erstarren des Kunststoffs steht dann ein starres, festes Bauteil in der entsprechenden dreidimensionalen Form zur Verfügung.

Aufgrund der geringen Wärmebelastbarkeit der Naturfasern, die bei hohen Temperaturen thermisch geschädigt werden können, werden als Bindemittel in Form der Kunststoffasern oder der Imprägnierung thermoplastische oder niedrigschmelzende duroplastische Kunststoffe, wie Polypropylen, Polyethylen, Ethylenvenylacetat und dgl. eingesetzt, deren Schmelztemperatur 250°C nicht oder nicht wesentlich überschreiten darf. Die mit einem derartigen Verbundwerkstoff erzielbaren mechanischen Eigenschaften genügen jedoch oft den an die entsprechenden Bauteile gestellten Festigkeitsanforderungen nicht.

Zur Erhöhung der Festigkeit von unter Verwendung von Naturfasern hergestellten Bauteilen und zur Erhöhung der Formgebungseigenschaften des aus Fasermatten bestehenden Ausgangsmaterials wurde mit der DE 44 03 977 A1 bereits ein einstückiger, mehrschichtiger Verbundkörper vorgeschlagen, der im wesentlichen durch eine Tragschicht mit in diese eingebetteten Naturfasern sowie die Tragschicht beidseitig abdeckenden Deckschichten aus thermoplastischem Kunststoff mit in diese eingebundenen Glasfasern besteht. Zusätzlich ist dieer aus einzelnen Thermoplastschichten zusammengefügte Mehrschichtkörper an einer Außenseite mit einer Schaumschicht sowie einer Dekorschicht aus einem Gewebe abgedeckt. Mit diesem Aufbau und dieser Schichtanordnung ist eine innige, einstückige Verbindung zwischen den Schichten und insbesondere eine hohe Biegesteifigkeit und Schlagzähigkeit, wie sie gerade von Kraftfahrzeugen oftmals gefordert wird, nicht erreichbar.

Der Erfindung liegt daher die Aufgabe zugrunde, einen unter Verwendung von Naturfasern hergestellten Verbundkörper aus Kunststoff so auszubilden, daß es den an ein aus diesem gefertigten Bauteil gestellten mechanischen Eigenschaften, insbesondere in bezug auf die Biegesteifigkeit und Schlagzähigkeit, gerecht wird.

Erfindungsgemäß wird die Aufgabe mit einem mehrlagigen Verbundkörper gemäß dem Oberbegriff des Patentanspruchs 1 gelöst, der mindestens eine Verstärkungseinlage aus einem offenporigen Gewebe aus Fasern aufweist, das ein- oder beidseitig von den schmelzenden Kunststoffen benachbarter Naturfaserschichten und/oder Thermoplastschichten durchdrungen und in diese als Bewehrung eingebunden ist.

Der Grundgedanke der Erfindung liegt somit in der Anordnung eines gegenüber dem während der Formgebung aufschmelzenden Kunststoff schmelzenden, hochfesten Gewebes, in das der aufgeschmolzene Kunststoff von beiden Seiten eindringgt. Durch das als Bewehrung wirkende Gewebe werden die Festigkeitseigenschaften wesentlich verbessert und gleichzeitig wird über die Gewebeeinlage eine innige Verbindung zwischen benachbarten, aus niedrigschmelzenden Kunststoffen mit oder ohne Naturfasern bestehenden Schichten hergestellt.

Mit Hilfe der Verstärkungseinlagen aus Gewebe können somit Verbundkörperbauteile zur Verfügung gestellt werden, die auf einfache Weise herstellbar sind und gute mechanische Eigenschaften, insbesondere eine hohe Biegesteifigkeit und Schlagzähigkeit aufweisen.

Vorteilhafterweise ist die Verstärkungseinlage aus Gewebe jeweils zwischen zwei in thermoplastischem Kunststoff gebundenen Naturfaserschichten angeordnet, wobei gerade in diesem Verbund hervorragende Festigkeitseigenschaften des Verbundkörpers erzielt werden können.

Andererseits können aber auch Verbundkörper hergestellt werden, bei denen die Verstärkungseinlage zwischen einer reinen Thermoplastschicht und einer kunststoffgebundenen Naturfaserschicht liegen oder schließlich zwischen zwei Thermoplastschichten angeordnet sein können.

In vorteilhafter Ausgestaltung der Erfindung kann der Verbundkörper auch zwei oder mehrere Verstärkungseinlagen aus Gewebe enthalten, die aber in jedem Fall jeweils zwischen zwei einen niedrigschmelzenden Kunststoff enthaltenden Schichten angeordnet sind.

Weitere Merkmale und vorteilhafte Weiterbildungen der Erfindung, insbesondere in bezug auf die eingesetzten Werkstoffe oder spezielle Ausführungsvarianten hinsichtlich der Zuordnung einzelner Schichten und Verstärkungseinlagen sind in den Unteransprüchen und den nachfolgend dargestellten Ausführungsvarianten angegeben.

Anhand von vier Ausführungsbeispielen wird die Erfindung mit Bezug auf die Zeichnung näher erläutert. Es zeigen:
- Fig. 1: eine perspektivische Darstellung einer Matte mit beidseitigen außenliegenden Verstärkungsgeweben;
- Fig. 2: in perspektivischer Darstellung den Randabschnitt einer Natur-/Thermoplast-Fasermatte mit einer einzigen Verstärkungseinlage aus offenporigem Gewebe;
- Fig. 3: eine perspektivische Darstellung einer weiteren Ausführungsform einer Fasermatte mit drei Verstärkungseinlagen für den zu bildenden Verbundkörper und
- Fig. 4: eine Fasermatte in der Darstellung nach Fig. 2, jedoch zusätzlich mit einer beidseitig angeordneten Abdeckfolie.

Die Fasermatten in den hier wiedergegebenen Ausführungsbeispielen sind mit jeweils gegenüber der darüberliegenden Schicht weggeschnittenen Randstreifen der einzelnen Schichten dargestellt, um in der perspektivischen Ansicht alle Schichten sichtbar machen zu können. Die zeichnerische Darstellung der Fasermatte, die das Ausgangsmaterial für den zu formenden Verbundkörper bzw. das geformte Bauteil bildet, ist mit der eines Verbundkörpers identisch.

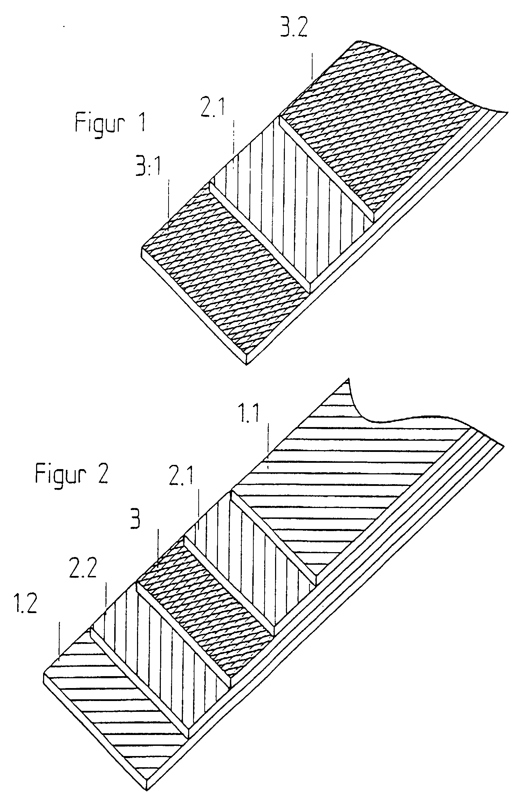

In der Grundausführung nach Figur 1 wird eine Naturfaserschicht 2.1 auf beiden Seiten von je einem Verstärkungsgewebe 3.1 und 3.2 abgedeckt. Nach Figur 2 umfaßt eine Fasermatte bzw. ein Verbundkörper jeweils eine aus Fasern gebildete erste und zweite Thermoplastschicht 1.1 und 1.2 als den Verbundkörper beidseitig abdeckende Außenschicht. Als thermoplastisches Fasermaterial wird Polypropylen oder beispielsweise auch Polyethylen oder Ethylenvenylacetat eingesetzt. An die außenliegenden ersten und zweiten Thermoplastschichten 1.1 und 1.2 schließen sich nach innen jeweils eine erste und eine zweite Naturfaserschicht 2.1 und 2.2 an. Die Naturfaserschichten 2.1 und 2.2 bestehen aus Naturfasern, wie Hanf, Flachs, Jute, Sisal und dgl. oder auch aus Naturfasergemischen, die mit einem Bindemittel aus thermoplastischem Kunststoff getränkt oder mit entsprechenden Fasern vermischt sind und nach der Formgebung mit dem Bindemittel einen Verbund bilden.

Die mittlere, zwischen den beiden thermoplastgebundenen Naturfaserschichten 2.1 und 2.2 eingebettete Schicht ist eine Verstärkungseinlage 3 aus einem Gewebe mit offenen Strukturen, das aus einem Fasermaterial mit höherer Schmelztemperatur als die des für die Naturfaserschichten 2.1 und 2.2 verwendeten thermoplastischen Bindemittels besteht. Im Ausführungsbeispiel besteht das großporige Gewebe der Verstärkungseinlage 3 aus Polyesterfasern. Beispielsweise können auch Fasern aus Polybuthylenteraphtalat oder Kohlefasern oder Glasfasern oder auch eine Kombination aus diesen oder anderen hochschmelzenden Fasern eingesetzt werden.

Die so ausgebildete Fasermatte wird nun zu einem beispielsweise für die Kraftfahrzeugherstellung benötigten Verbundkörper-Bauteil geformt, indem die Fasermatte zum einen auf eine im Schmelztemperaturbereich der verwendeten Thermoplasten liegende Temperatur von etwa 200°C erwärmt und dabei in die gewünschte Form verpreßt wird.

Das Volumen der an den Außenseiten der Naturfaserschichten 2.1 und 2.2 liegenden ersten und zweiten Thermoplastschichten 1.2 und 1.1 ist so gewählt, daß während des Preßvorgangs an diesen Schichten Funktionselemente, wie Befestigungslaschen, Rippen u. ä. oder auch bestimmte optisch wirksame Oberflächenstrukturen ausgebildet werden können. Gleichermaßen kann aus ästhetischen Gründen eine besondere Farbgebung der ersten und zweiten Thermoplastschichten 1.1 und 1.2 vorgesehen sein.

Beim Verpressen der erwärmten Fasermatte dringen die niedrigschmelzenden, aufgeschmlozenen Thermoplasten der Naturfaserschichten 2.1 und 2.2 von beiden Seiten in die weitmaschige Gewebestruktur der Verstärkungseinlage 3 ein und ummanteln das Gewebe der Verstärkungseinlage 3. Es entsteht somit ein enger Verbund mit den benachbarten Naturfaserschichten 2.1 und 2.2, wobei das Gewebe als Bewehrung wirkt. Dadurch werden die mechanischen Eigenschaften des so hergestellten Bauteils, insbesondere hinsichtlich Biegespannung und Schlagzähigkeit, erheblich verbessert.

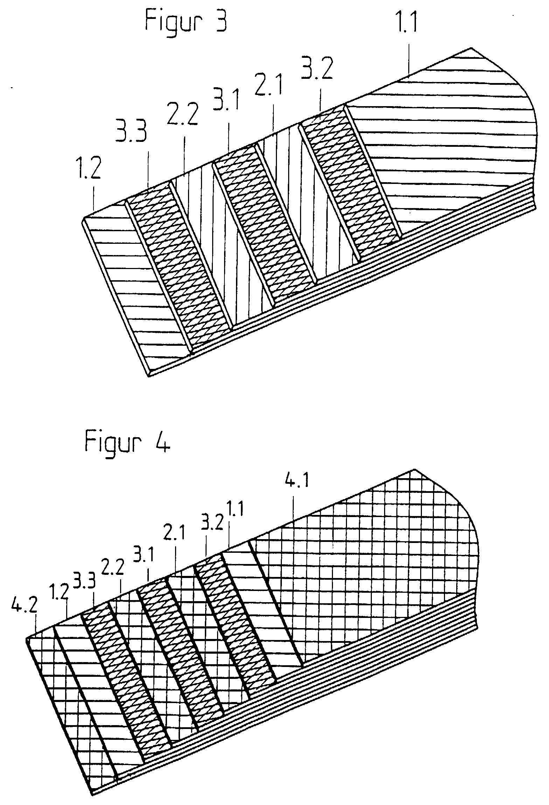

Figur 3 zeigt in einer zweiten Ausführungsvariante eine Fasermatte zur Herstellung von Bauteilen mit gegenüber dem ersten Ausführungsbeispiel weiter verbesserten Festigkeitseigenschaften durch Verwendung von drei Verstärkungseinlagen 3.1, 3.2 und 3.3. Die aus mehreren Schichten gebildete Fasermatte besteht in der nachfolgenden wiedergebenden Reihenfolge aus einer ersten Thermoplastschicht 1.1, einer zweiten Verstärkungseinlage 3.2, einer ersten Naturfaserschicht 2.1, einer ersten Verstärkungseinlage 3.1, einer zweiten Naturfaserschicht 2.2, einer dritten Verstärkungseinlage 3.3 und einer zweiten Thermoplastschicht 1.2.

Beim Erwärmen und Verpressen einer so aus Einzelschichten gebildeten Fasermatte durchdringt das aufgeschmolzene thermoplastische Material der ersten und zweiten Thermoplastschichten 1.1, 1.2 und der ersten und zweiten Naturfaserschichten 2.1, 2.2 jeweils beidseitig die offenporige, aus höherschmelzenden Fasern bestehende Gewebestruktur der Verstärkungseinlagen 3.1, 3.2 und 3.3, die in dem so gebildeten Bauteil aus einem sandwichartigen, einstückigen Verbundkörper somit eine mehrschichtige Bewehrung bilden und zu einer deutlichen Steigerung der Festigkeitseigenschaften beitragen. Entsprechend der Stärke der aus den Thermoplastschichten 1.1 und 1.2 gebildeten Außenschichten des Verbundkörpers können an diesem beim Verpressen wieder bestimmte Funktionselemente und Oberflächenstrukturen ausgeformt werden.

Die Ausführungsform nach Figur 4 entspricht im wesentlichen dem in Figur 3 beschriebenen Ausführungsbeispiel, jedoch sind die Außenflächen der Fasermatte bzw. des aus einem Verbundkörper bestehenden Bauteils zusätzlich mit einer Abdeckfolie 4.1 und 4.2 oder anderen Dekorstoffen, beispielweise zur Verbesserung der optischen Eigenschaften, versehen.

## Patentansprüche

1. Mehrlagiger Verbundkörper, der gebildet ist durch mit thermoplastischem Kunststoff gebundene Naturfaserschichten und gegebenenfalls Thermoplastschichten, zur Herstellung von Bauteilen oder Formteilen, insbesondere für Kraftfahrzeuge, gekennzeichnet durch mindestens eine Verstärkungseinlage (3) aus einem aus Fasern gebildeten offenporigen Gewebe, das ein- oder beidseitig von den schmelzenden Kunststoffen benachbarter Naturfaserschichten (2.1, 2.2) und/oder Thermoplastschichten (1.1, 1.2) durchdrungen und in diese als Bewehrung eingebunden ist.

2. Mehrlagiger Verbundkörper nach Anspruch 1, dadurch gekennzeichnet, daß der für die Thermoplast- und Naturfaserschichten verwendete Kunststoff eine Schmelztemperatur von < 250°C aufweist.

3. Mehrlagiger Verbundkörper nach Anspruch 1 oder 2, dadurch gekennzeichnet, daß der Kunststoff für die Thermoplast- und Naturfaserschichten Polyethylen, Polypropylen oder Ethylenvinylacetat ist.

4. Mehrlagiger Verbundkörper nach Anspruch 1 oder 2, dadurch gekennzeichnet, daß die Naturfasern für die Naturfaserschichten (2.1, 2.2) aus Flachs, Hanf, Sisal oder Jute oder aus Mischungen aus diesen bestehen.

5. Mehrlagiger Verbundkörper nach einem der Ansprüche 1 bis 4, dadurch gekennzeichnet, daß das Fasermaterial für das Gewebe der Verstärkungseinlagen (3) aus schmelzenden Kunststoffen, wie Polyethylenteraphtalat oder Polybuthylenteraphtalat oder aus Glasfasern oder Kohlefasern oder aus einer Kombination verschiedener schmelzender Fasern besteht.

6. Mehrlagiger Verbundkörper nach einem der Ansprüche 1 bis 5, gekennzeichnet durch eine mittig angeordnete Verstärkungseinlage (3) sowie jeweils an deren Außenflächen liegende erste und zweite Naturfaserschichten (2.1, 2.2), deren thermoplastisches Bindemittel gleichzeitig das Fasergewebe der Verstärkungseinlage (3) durchsetzt, sowie jeweils die verbleibenden Außenflächen der ersten und zweiten Naturfaserschichten (2.1, 2.2) abdeckende und mit diesen verbundene, als Außenschicht dienende erste und zweite Thermoplastschichten (1.1, 1.2).

7. Mehrlagiger Verbundkörper nach Anspruch 6, dadurch gekennzeichnet, daß zwischen den ersten Naturfaser- und Thermoplastschichten (2.1, 1.1) und den zweiten Naturfaser- und Thermoplastschichten (2.2, 1.2) jeweils eine weitere, zweite und dritte Verstärkungseinlage (3.2, 3.3) angeordnet und in das thermoplastische Material der benachbarten Schichten eingebunden ist.

8. Mehrlagiger Verbundkörper nach einem der Ansprüche 1 bis 7, dadurch gekennzeichnet, daß die Thermoplastschichten (1.1, 1.2) aus während der Formgebung des betreffenden Bauteils aufgeschmolzenen Faserstoffen oder Folie bestehen.

9. Mehrlagiger Verbundkörper nach einem der Ansprüche 1 bis 8, dadurch gekennzeichnet, daß entsprechend dem variierbaren Volumen der Thermoplastschichten (1.1, 1.2) in den von diesen gebildeten Außenseiten des Bauteils während des Formgebungsvorgangs eingeformte Funktionselemente und/oder Oberflächenstrukturen vorgesehen sind.

10. Mehrlagiger Verbundkörper nach einem der Ansprüche 1 bis 9, dadurch gekennzeichnet, daß die Thermoplastschichten (1.1, 1.2) eingefärbt sind.

11. Mehrlagiger Verbundkörper nach einem der Ansprüche 1 bis 10, dadurch gekennzeichnet, daß an den Außenflächen mit den Thermoplastschichten (1.1, 1.2) verbundene Abdeckschichten (4.1, 4.2) vorgesehen sind.

12. Mehrlagiger Verbundkörper nach einem der Ansprüche 1 bis 11, dadurch gekennzeichnet, daß der Schmelzpunkt für die Verstärkungseinlagen höher ist als der Schmelzpunkt für das zur Verwendung kommende Thermoplast.

## Claims

1. Multilayer compound body, which is formed by natural fibre layers bonded with thermoplastic synthetic material and in a given case by thermoplastic material layers, for the manufacture of components or moulded parts, in particular for motor vehicles, characterised by at least one reinforcing insert (3) of an open-pored fabric which is formed by fibres and penetrated at one or both sides by the melting synthetic materials of neighbouring natural fibre layers (2.1, 2.2) and/or thermoplastic material layers (1.1, 1.2) and bonded into those as reinforcement.

2. Multilayer compound body according to claim 1, characterised in that the synthetic material used for the thermoplastic material and natural fibre layers has a melting point of less than 250° C.

3. Multilayer compound body according to claim 1 or 2, characterised in that the synthetic material for the thermoplastic and natural fibre layers is polyethylene, polypropylene or ethylene vinyl acetate.

4. Multilayer compound body according to claim 1 or 2, characterised in that the natural fibres for the natural fibre layers (2.1, 2.2) consist of flax, hemp, sisal or jute or of mixtures of these.

5. Multilayer compound body according to one of claims 1 to 4, characterised in that the fibre material for the fabric of the reinfordng inserts (3) consists of melting synthetic materials such as polyethylene teraphthalate or polybuthylene teraphthalate or of glass fibres or carbon fibres or of a combination of different melting fibres.

6. Multilayer compound body according to one of claims 1 to 5, characterised by a centrally arranged reinforcing insert (3) as well as first and second natural fibre layers (2.1, 2.2), which lie respectively at the outer surfaces thereof and the thermoplastic binding agent of which penetrates the fibre fabric of the reinforcing insert (3) at the same time, as well as first and second thermoplastic material layers (1.1, 1.2), which serve as outer layer and which respectively cover the remaining outer surfaces of the first and second natural fibre layers (2.1, 2.2) and are connected therewith.

7. Multilayer compound body according to claim 6, characterised in that a further, second and third reinforcing insert (3.2, 3.3) is respectively arranged between the first natural fibre and thermoplastic material layers (2.1, 1.1) and the second natural fibre and thermoplastic material layers (2.2, 1.2) and is bonded into the thermoplastic material of the neighbouring layers.

8. Multilayer compound body according to one of claims 1 to 7, characterised in that the thermoplastic material layers (1.1, 1.2) consist of foil or fibrous substances molten during the shaping of the component concerned.

9. Multilayer compound body according to one of claims 1 to 8, characterised in that surface structures and/or functional elements, which are moulded into the outward sides of the component, which are formed by the thermoplastic material layers (1.1, 1.2), during the shaping operation, are provided in accordance with the variable volume of these layers.

10. Multilayer compound body according to one of claims 1 to 9, characterised in that the thermoplastic material layers (1.1, 1.2) are dyed.

11. Multilayer compound body according to one of claims 1 to 10, characterised in that covering layers (4.1, 4.2) connected with the thermoplastic material layers (1.1, 1.2) are provided at the outer surfaces.

12. Multilayer compound body according to one of claims 1 to 11, characterised in that the melting point for the reinforcing inserts is higher than the melting point for the thermoplastic material coming into use.

## Revendications

1. Corps composite à plusieurs couches, formé par des couches de fibres naturelles reliées avec une matière synthétique thermoplastique et le cas échéant par des couches de matière thermoplastique, pour fabriquer des pièces profilées ou des pièces détachées, en particulier pour véhicules automobiles,
caractérisé par
au moins une garniture de renforcement (3) faite d'un tissu à pores ouverts renforcé de fibres, qui est pénétrée d'un ou des deux côtés par les matières synthétiques en fusion de couches de fibres naturelles voisines (2.1, 2.2) et/ou des couches thermoplastiques (1.1, 1.2), et y est intégrée en tant qu'armature.

2. Corps composite multicouche selon la revendication 1,
caractérisé en ce que
la matière synthétique utilisée pour les couches thermoplastiques et pour les couches de fibres naturelles présente une température de fusion inférieure à 250°C.

3. Composite multicouche selon la revendication 1 ou 2,
caractérisé en ce que
la matière synthétique pour les couches thermoplastiques et pour les couches de fibres naturelles est le polyéthylène, le polypropylène ou le vinylacétate d'éthylène.

4. Corps composite multicouche selon la revendication 1 ou 2,
caractérisé en ce que
les fibres naturelles pour les couches de fibres naturelles 2.1, 2.2 se composent de lin, de chanvre, de sisal ou de jute ou de mélanges de ces corps.

5. Corps composite multicouche selon l'une des revendications 1 à 4,
caractérisé en ce que
le matériau fibreux pour le tissu des garnitures de renforcement (3) se compose de matières synthétiques fusibles, comme le téréphtalate de polyéthylène ou le téréphtalate de polybutylène, ou de fibres de carbone, ou d'une combinaison de diverses fibres fusibles.

6. Corps composite multicouche selon l'une des revendications 1 à 5,
caractérisé par
une garniture de renforcement (3) disposée au milieu ainsi que par une première et une seconde couche de fibres naturelles (2.1, 2.2) située sur chacune de ses faces externes, dont le liant thermoplastique pénètre simultanément le tissu fibreux de la garniture de renforcement (3), ainsi que sur chacune des surfaces externes restantes des première et seconde couches de fibres naturelles (2.1, 2.2) et une première et une seconde couche thermoplastique (1.1, 1.2) qui y sont liées et qui servent de couche externe.

7. Corps composite multicouche selon la revendication 6,
caractérisé en ce qu'
on dispose, à chaque fois entre les premières couches de fibres naturelles et couches de matières thermoplastiques (2.1, 1.1) et les secondes couches de fibres naturelles et de matières thermoplastiques (2.2, 1.2), une autre, seconde et troisième garniture de renforcement (3.2, 3.3), qui est intégrée dans le matériau thermoplastique des couches voisines.

8. Corps composite multicouche selon l'une des revendications 1 à 7,
caractérisé en ce que
les couches de matière thermoplastique (1.1, 1.2) se composent de fibres ou de feuilles fondues au cours du façonnage de la pièce profilée concernée.

9. Corps composite multicouche selon l'une des revendications 1 à 8,
caractérisé en ce que
d'une manière correspondant aux volumes variables des couches de matière thermoplastique (1.1, 1.2) dans les côtés externes de la pièce profilée qu'elles forment au cours du processus de façonnage, sont prévus des éléments de fonction et/ou des structures superficielles intégrées.

10. Corps composite multicouche selon l'une des revendications 1 à 9,
caractérisé en ce que
les couches de matière thermoplastique (1.1, 1.2) sont colorées.

11. Corps composite multicouche selon l'une des revendications 1 à 10,
caractérisé en ce que
des couches de revêtement (4.1, 4.2) sont prévues sur les surfaces externes, liées aux couches de matière thermoplastique (1.1, 1.2).

12. Corps composite multicouche selon l'une des revendications 1 à 11,
caractérisé en ce que
le point de fusion des garnitures de renforcement est plus élevé que le point de fusion de la matière thermoplastique utilisée.
